# EUROPÄISCHE PATENTSCHRIFT

(11) **EP 3 124 880 B1**
(45) Veröffentlichungstag und Bekanntmachung des Hinweises auf die Patenterteilung: **15.11.2017**
(21) Anmeldenummer: 16178628.0
(22) Anmeldetag: 08.07.2016
(51) Int. Cl.: F24D 19/08, F16K 24/00, F16L 55/07, F16L 55/24

(54) **VORRICHTUNG ZUM ENTLÜFTEN EINER ROHRLEITUNGSANLAGE**
DEVICE FOR VENTING A PIPELINE SYSTEM
DISPOSITIF DE PURGE D'AIR D'UN SYSTEME DE TUYAUTERIE

(30) Priorität: 31.07.2015 DE 202015104021 U
(43) Veröffentlichungstag der Anmeldung: 01.02.2017
(73) Patentinhaber: I.C.B. Innovations-Center-Bad GmbH & Co. KG, 33181 Bad Wünnenberg (DE)
(72) Erfinder:
(74) Vertreter: Wickord, Wiro

(56) Entgegenhaltungen:
- EP-A1- 0 237 508
- EP-A1- 2 824 400
- GB-A- 1 187 407
- GB-A- 2 133 718
- US-A- 2 713 973

## Beschreibung

Die Erfindung betrifft eine Vorrichtung zum Entlüften einer Rohrleitungsanlage umfassend ein Gehäuse mit einer Zuflussöffnung, über die eine optional mit einem Schadfluid durchsetzte Nutzflüssigkeit in eine Zuflussrichtung in das Gehäuse eintritt, mit einer Abflussöffnung für die Nutzflüssigkeit und mit einer Entlüftungsöffnung für das Schadfluid, welche in einer Einbauposition oberhalb der Zuflussöffnung und der Abflussöffnung vorgesehen ist, und einen Volumenänderungskörper, welcher die Entlüftungsöffnung des Gehäuses in einer ersten Betriebsposition verschließt und in einer zweiten Betriebsposition freigibt, wobei der Volumenänderungskörper mit der Nutzflüssigkeit derart in einer Wirkverbindung steht, dass die Entlüftungsöffnung verschlossen wird, wenn ein Nutzflüssigkeitsfüllstand eine Soll-Füllstandshöhe erreicht, und ansonsten die Entlüftungsöffnung freigegeben wird, sodass das Schadfluid aus der Rohrleitungsanlage entweicht.

Üblicherweise werden zum Entlüften von Rohrleitungsanlagen Entlüftungsmodule vorgesehen, welche in einer Einbauposition eine große vertikale Erstreckung aufweisen. Die große vertikale Erstreckung begünstigt das Ausperlen eines Schadfluids aus einer Nutzflüssigkeit. Beispielsweise dient das Entlüftungsmodul dazu, Luft als Schadfluid aus einer Heizflüssigkeit, insbesondere Wasser, ausperlen zu lassen. Es kann hierbei das Schadfluid vollständig oder teilweise von der Flüssigkeit getrennt werden.

Die handelsüblichen Entlüftungsmodule sind aufgrund ihrer großen vertikalen Erstreckung nicht geeignet zur Montage im Bereich einer abgehangenen Decke. Wird etwa im Rahmen einer Modernisierungsmaßnahme ein Wohnraum, insbesondere ein Badezimmer neu eingerichtet, können die neuen Rohrleitungen unter der Raumdecke vorgesehen werden. Zur Verkleidung der neuen Rohrleitungen wird dann abschnittsweise oder vollflächig eine abgehangene Decke vorgesehen. Hier ist es zur bestmöglichen Beibehaltung der ursprünglichen Raumhöhe erforderlich, die vertikale Erstreckung aller Komponenten möglichst gering zu halten. Ein Entlüftungsmodul sollte aus diesem Grund eine vertikale Höhe von wenigen Zentimetern bezogen auf die Einbauposition aufweisen. Es kann dann gelingen, dass die Raumhöhe nach der Modernisierung nur etwa 10 cm geringer ist als vor der Modernisierung und im Normalfall nicht oder nicht als kritisch wahrgenommen wird. Ein Beispiel gemäß der Präambel des Anspruchs 1 ist aus dem Dokument EP 2 824 400 A1 benannt. Aufgabe der vorliegenden Erfindung ist es demzufolge, eine Vorrichtung zum Entlüften einer Rohrleitungsanlage anzugeben, welche besonders kompakt baut und insbesondere durch eine geringe vertikale Höhe gekennzeichnet ist.

Zur Lösung der Aufgabe ist die Erfindung in Verbindung mit dem Oberbegriff des Patentanspruchs 1 dadurch gekennzeichnet, dass bezogen auf die Zuflussrichtung der optional mit dem Schadfluid durchsetzten Nutzflüssigkeit vor der Zuflussöffnung eine Prallfläche vorgesehen und dass benachbart zu der Prallfläche zwei flach ansteigend orientierte Steigkanäle für die Nutzflüssigkeit vorgesehen sind, wobei die zwei Steigkanäle in eine gemeinsame Ringkammer münden, welcher eine Zentralkammer umgibt und mit dieser über Durchlassöffnungen verbunden ist, und wobei durch die Zentralkammer das Schadfluid zu der Entlüftungsöffnung und die Heizungsflüssigkeit zu der Abflussöffnung gelangt.

Der besondere Vorteil der Erfindung besteht darin, dass durch die spezielle Geometrie die erfindungsgemäße Vorrichtung eine geringe vertikale Höhe aufweisen kann und gleichzeitig das Schadfluid von der Nutzflüssigkeit getrennt wird. Insbesondere wird das Ausperlen des Schadfluids aus der Nutzflüssigkeit durch das Vorsehen der Prallfläche begünstigt. Die mit dem Schadfluid durchsetzte Flüssigkeit trifft nach dem Eintreten in das Gehäuse zunächst auf die Prallfläche. Es entsteht so eine turbulente Strömungssituation, die das Entweichen des Schadfluids begünstigt. Die Nutzflüssigkeit mit dem Schadfluid strömt dann durch die flach ansteigend ausgebildeten Steigkanäle. In den Steigkanälen setzt sich das Ausperlen des Schadfluids fort. Zugleich wird die Strömung beruhigt und verlangsamt. Anschließend expandiert die Nutzflüssigkeit in den sich an die Steigkanäle anschließenden Ringraum, das Ausperlen setzt sich fort und das Schadfluid setzt sich ab. Zugleich dienen der Ringraum und die sich anschließende Zentralkammer der weiteren Beruhigung der Strömung. Über die Zentralkammer gelangt wenigstens ein Teil des Schadfluids zu der Entlüftungsöffnung und tritt über diese aus der Rohrleitungsanlage aus. Die Nutzflüssigkeit und gegebenenfalls ein Rest des Schadfluids gelangen über die Zentralkammer zu der Entlüftungsöffnung und verlassen die erfindungsgemäße Vorrichtung.

Neben den strömungstechnischen Vorteilen, welche insbesondere die zwei flach ausgeführten Steigkanäle und der Ringraum in Verbindung mit der Prallfläche aufweisen, bietet das Vorsehen der zwei in den gemeinsamen Ringraum mündenden Steigkanäle und die von dem Ringraum umgriffene Zentralkammer die Möglichkeit, die erfindungsgemäße Vorrichtung extrem platzsparend auszuführen. Die erfindungsgemäße Vorrichtung ist insofern zum einen durch die geringe vertikale Höhe ausgezeichnet. Zum anderen ist die Bauform insgesamt sehr kompakt, sodass eine Montage auch bei geringem Platzangebot möglich ist. Insbesondere im Bereich der Altbaumodernisierung kann dies von Vorteil sein.

Im Zuge der Entwicklung der erfindungsgemäßen Vorrichtung hat sich in dem Bestreben, eine sehr geringe vertikale Höhe realisieren zu können, überraschend gezeigt, dass ein langgestreckter, flacher Steigkanal in Verbindung mit einer turbulenten Strömung am Beginn des Steigkanals zu sehr guten Ausperleigenschaften führt. Dabei ist es zur Erzielung einer geringen vertikalen Höhe von Vorteil, benachbart zu der Prallfläche zwei flach ausgeführte Steigkanäle vorzusehen. Eine Steigung kann insbesondere so ausgeführt sein, dass das Verhältnis der Steighöhe zur Kanallänge im Bereich von 1 : 2 oder weniger liegt. Besonders gute Ergebnisse zeigten sich in den umfangreichen Versuchen der Anmelderin, wenn das Verhältnis der Steighöhe zur Kanallänge im Bereich von 1 : 3 oder weniger ausgeführt ist. Eine geringe Steighöhe kann insofern durch eine größere Kanallänge kompensiert werden.

Nach einer Weiterbildung der Erfindung ist die Prallfläche bevorzugt eben ausgebildet und senkrecht orientiert zu der Zuflussrichtung der optional das Schadfluid aufweisenden Nutzflüssigkeit. Vorteilhaft sind die Strömungsverhältnisse am Eintritt der Steigkanäle beim Vorsehen der senkrechten Orientierung der Prallfläche zur Zuflussrichtung besonders günstig. Das Vorsehen der eben ausgebildeten Prallfläche ist hierbei unter Fertigungsgesichtspunkten vorteilhaft. Die ebene Prallfläche kann beispielsweise im Wege einer spanenden Bearbeitung kostengünstig und schnell hergestellt werden. Ebenfalls verzichtet die ebene Prallfläche auf Hinterschnitte, sodass auch ein urformendes Fertigungsverfahren zur Anwendung kommen kann.

Nach einer Weiterbildung der Erfindung ist die Prallfläche als Teil einer Wandung der Zentralkammer ausgebildet. Vorteilhaft begünstigt das Vorsehen der Prallfläche an der Wandung der Zentralkammer den kompakten Aufbau des Gehäuses und der erfindungsgemäßen Vorrichtung. Es vereinfacht sich insofern die Integration der Vorrichtung in die Rohrleitungsanlage auch bei begrenztem Platzangebot.

Nach einer Weiterbildung der Erfindung ist der Volumenänderungskörper in einer die Entlüftungsöffnung aufweisenden Horizontalkammer vorgesehen. Die Horizontalkammer ist über eine Durchlassöffnung mit der Zentralkammer verbunden. Vorteilhaft reduziert sich durch das Vorsehen der Horizontalkammer die vertikale Höhe der erfindungsgemäßen Vorrichtung weiter. Die Horizontalkammer, welche insbesondere durch eine größere horizontale als vertikale Erstreckung gekennzeichnet ist, schließt sich an die Zentralkammer an. Insbesondere ist die Horizontalkammer bezogen auf die Einbauposition oberhalb der Zentralkammer vorgesehen. Das über die Steigkanäle, den Ringraum und die Zentralkammer geführte Schadfluid strömt in der Horizontalkammer in im Wesentlichen horizontaler Orientierung zur Entlüftungsöffnung. Sofern die Horizontalkammer rohrförmig ausgebildet ist beziehungsweise in horizontaler Richtung langgestreckt, kann sie in besonders einfacher Weise kostengünstig hergestellt werden. Beispielsweise kann die Horizontalkammer aus einem Rohrsegment gefertigt sein.

Die Horizontalkammer kann beispielsweise im Bereich einer ersten Stirnseite die Entlüftungsöffnung und den der Entlüftungsöffnung räumlich zugeordneten Volumenänderungskörper vorsehen. Im Bereich einer gegenüberliegenden zweiten Stirnseite kann an der Horizontalkammer ein manuell betätigbares Verschlusselement vorgesehen werden, welches in einer Schließstellung eine an der zweiten Stirnseite gebildete Öffnung der Horizontalkammer fluiddicht verschließt und in einer Öffnungsstellung die Öffnung freigibt. In der Öffnungsstellung kann beispielsweise die Nutzflüssigkeit beziehungsweise das Schadfluid durch die Öffnung entweichen. Vorteilhaft erlaubt das Vorsehen des Verschlusselements ein manuelles Entlüften. Dies ist beispielsweise bei Wartungsarbeiten oder bei der Befüllung der Rohrleitungsanlage von Vorteil. Demgegenüber erfolgt die Entlüftung während des Betriebs automatisch, indem das Verschlusselement die im Bereich der zweiten Stirnseite vorgesehene Öffnung verschließt und die eigentliche Entlüftungsöffnung durch den Volumenänderungskörper bedarfsgerecht verschlossen oder freigegeben wird.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Es zeigen:
- Fig. 1: einen Längsschnitt durch eine erfindungsgemäße Vorrichtung zum Entlüften einer Rohrleitungsanlage und
- Fig. 2: einen Schnitt A-A durch die Vorrichtung nach Fig. 1.

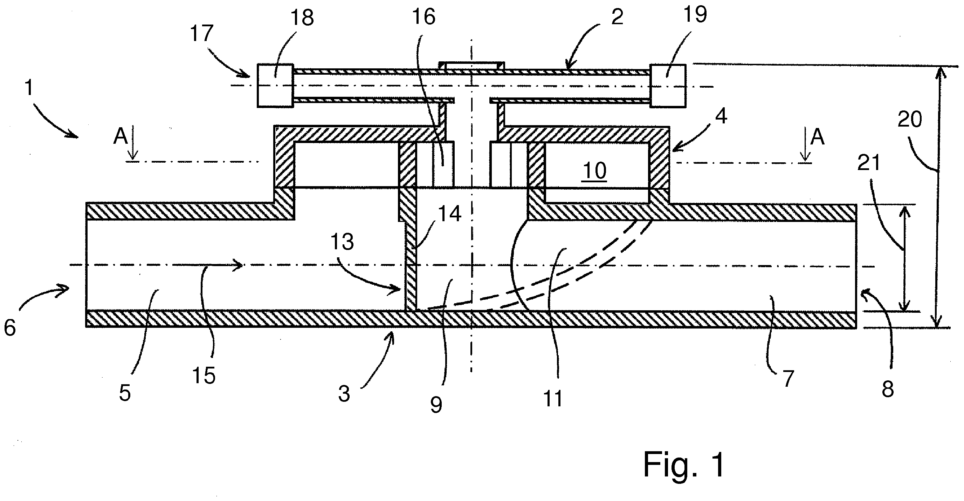

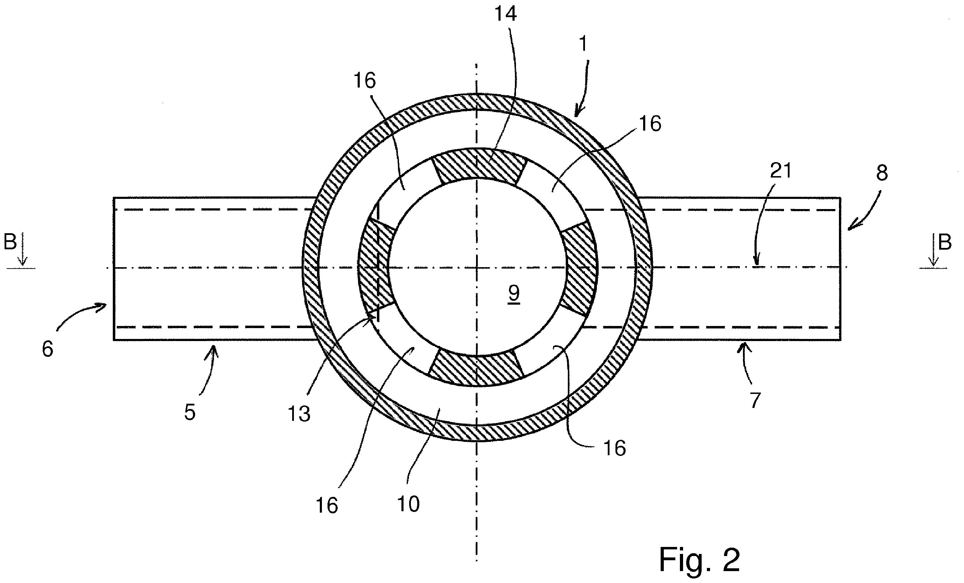

Eine erfindungsgemäße Vorrichtung zum Entlüften einer Rohrleitungsanlage nach den Fig. 1 und 2 sieht ein mehrteiliges Gehäuse mit einem zweiteiligen Grundgehäuse 1 und einem weiteren Gehäusebauteil (Horizontalkammer 2), welches an das Grundgehäuse 1 angesetzt ist. Das Grundgehäuse 1 sieht einen Hauptkörper 3 und einen Verschluss 4 vor. Zwischen dem Hauptkörper 3 und dem Verschluss 4 ist eine nicht dargestellte Dichtung vorgesehen. An dem Hauptkörper 3 ist zum einen ein Zulaufstutzen 5 vorgesehen, der zum Anschluss der erfindungsgemäßen Vorrichtung an benachbarte Rohrleitungen dient und eine Zuflussöffnung 6 aufweist. Weiter ist an dem Hauptkörper 3 ein Ablaufstutzen 7 mit einer Abflussöffnung 8 ausgebildet. Ferner sind als Teil des Grundgehäuses 1 eine zylindrisch geformte, vertikal orientierte Zentralkammer 9, eine die Zentralkammer 9 im Bereich einer dem Gehäusebauteil zugewandten Stirnseite umgreifenden Ringkammer 10 sowie zwei zu der Ringkammer 10 hinführende Steigkanäle 11, 12 vorgesehen. Der Zuflussöffnung 6 gegenüberliegend ist eine Prallfläche 13 realisiert. Die Prallfläche 13 ist als Teil einer Wandung 14 der Zentralkammer 9 ausgebildet.

Strömt eine optional mit einem Schadfluid durchsetzte Nutzflüssigkeit in eine Zuflussrichtung 15 über die Zuflussöffnung 6 in das Grundgehäuse 1, trifft es dort zunächst auf die Prallfläche 13. Infolge des Aufpralls auf die senkrecht zur Zuflussrichtung 15 eben erstreckte Prallfläche 13 kommt es zu Verwirbelungen der das Schadfluid aufweisenden Nutzflüssigkeit. Die Nutzflüssigkeit mit dem Schadfluid gelangt im Weiteren über die flach ansteigend ausgebildeten Steigkanäle 11, 12 in die Ringkammer 10 und von dort über eine Mehrzahl von in Umfangsrichtung verteilt angeordneten Durchlassöffnungen 16 in die Zentralkammer 9. Über die Zentralkammer 9 strömt die Nutzflüssigkeit in Richtung des Ablaufstutzens 7 und tritt von dort über die Abflussöffnung 8 aus dem Grundgehäuse 1 der erfindungsgemäßen Vorrichtung aus. Das Schadfluid gelangt über eine zwischen der Zentralkammer 9 und dem mit dem Grundgehäuse 1 verbundenen Gehäusebauteil zu einer Entlüftungsöffnung 17.

Der Entlüftungsöffnung 17 ist ein Volumenänderungskörper 18 zugeordnet. Der Volumenänderungskörper 18 verschließt die Entlüftungsöffnung 17 in einer ersten Betriebsposition und gibt diese in einer zweiten Betriebsposition frei. Dabei ist der Volumenänderungskörper 18 mit der Nutzflüssigkeit derart in Wirkverbindung, dass die Entlüftungsöffnung 17 verschlossen wird, wenn ein Nutzflüssigkeitsfüllstand eine Soll-Füllstandshöhe erreicht und der Volumenänderungskörper 18 ebenfalls abschnittsweise mit der Nutzflüssigkeit in Kontakt steht, und dass ansonsten die Entlüftungsöffnung 17 freigegeben wird, sodass das Schadfluid über die Entlüftungsöffnung 17 aus der Rohrleitungsanlage entweichen kann.

Das an das Grundgehäuse 1 angesetzte Gehäusebauteil ist dabei nach Art einer Horizontalkammer 2 langgestreckt ausgebildet. Die Horizontalkammer 2 ist insbesondere rohrförmig realisiert. Die Entlüftungsöffnung 17 mit dem der Entlüftungsöffnung 17 zugeordneten Volumenänderungskörper 18 sind im Bereich einer ersten Stirnseite der langgestreckt ausgebildeten Horizontalkammer 2 vorgesehen. Der ersten Stirnseite gegenüberliegend ist im Bereich einer zweiten Stirnseite ein manuell betätigbares Verschlusselement 19 vorgesehen, welches dazu dient, eine an der zweiten Stirnseite vorgesehene Öffnung der Horizontalkammer 2 in einer Schließstellung fluiddicht zu verschließen und in einer Öffnungsstellung freizugeben. In der Öffnungsstellung kann über die Öffnung die Nutzflüssigkeit beziehungsweise das Schadfluid austreten.

In Bezug auf die Geometrie ist die erfindungsgemäße Vorrichtung durch verschiedene Besonderheiten gekennzeichnet. Zum einen ist eine vertikale Höhe 20 der Vorrichtung gering. Insbesondere ist die vertikale Höhe 20 kleiner als 6 cm, bevorzugt kleiner als 5 cm und besonders bevorzugt kleiner als 4 cm. Um trotz der geringen vertikalen Höhe 20 eine zuverlässige Entlüftung der Rohrleitungsanlage zu gewährleisten, ist ein Verhältnis zwischen einer Steighöhe 21 der Steigkanäle 11, 12 und einer Kanallänge im Bereich von 1 : 2 oder weniger gewählt, bevorzugt ist das Verhältnis zwischen der Steighöhe 21 und der Kanallänge im Bereich von 1 : 3 oder weniger vorgesehen. Zusätzlich ist ein Volumen der Ringkammer 10 so gewählt, dass die durch die Steigkanäle 11, 12 der Ringkammer 10 zugeführte Nutzflüssigkeit beziehungsweise Schadfluid in der Ringkammer 10 expandiert. Durch das Vorsehen der erfindungsgemäß gestalteten Steigkanäle 11, 12 und der Expansion der Nutzflüssigkeit und des Schadfluids in der Ringkammer 10 sowie der Zentralkammer 9 kann das Schadfluid nach dem Auftreffen auf die Prallfläche 13 in besonders vorteilhafter Weise aus der Nutzflüssigkeit ausperlen und über die Horizontalkammer 2 aus der erfindungsgemäßen Vorrichtung entweichen. Indem die Ringkammer 10 die Zentralkammer 9 umgreift, ergibt sich besonders kompakter Aufbau der erfindungsgemäßen Vorrichtung. Der besonders kompakte Aufbau wird weiter begünstigt durch das Vorsehen der zwei Steigkanäle 11, 12, welche ebenfalls die Zentralkammer 9 umgreifen und unterhalb der Ringkammer 10 vorgesehen sind. Schließlich begünstigt die als Teil der Zentralkammerwandung ausgebildete Prallfläche 13 die kompakte Bauform. Fertigungstechnisch vorteilhaft ist die erfindungsgemäße Vorrichtung symmetrisch in Bezug auf eine Längsmittelebene 22 ausgebildet.

## Patentansprüche

1. Vorrichtung zum Entlüften einer Rohrleitungsanlage umfassend
- ein Gehäuse mit einer Zuflussöffnung (6), über die eine optional mit einem Schadfluid durchsetzte Nutzflüssigkeit in eine Zuflussrichtung (15) in das Gehäuse eintritt, mit einer Abflussöffnung (8) für die Nutzflüssigkeit und mit einer Entlüftungsöffnung (17) für das Schadfluid, welche in einer Einbauposition oberhalb der Zuflussöffnung (6) und der Abflussöffnung (8) vorgesehen ist, und
- einen Volumenänderungskörper (18), welcher die Entlüftungsöffnung (17) des Gehäuses in einer ersten Betriebsposition verschließt und in einer zweiten Betriebsposition freigibt, wobei der Volumenänderungskörper (18) mit der Nutzflüssigkeit derart in einer Wirkverbindung steht, dass die Entlüftungsöffnung (17) verschlossen wird, wenn ein Nutzflüssigkeitsfüllstand eine Soll-Füllstandshöhe erreicht, und ansonsten die Entlüftungsöffnung (17) freigegeben wird, sodass das Schadfluid aus der Rohrleitungsanlage entweicht,
**dadurch gekennzeichnet, dass** bezogen auf die Zuflussrichtung (15) der optional mit dem Schadfluid durchsetzten Nutzflüssigkeit vor der Zuflussöffnung (6) eine Prallfläche (13) vorgesehen und dass benachbart zu der Prallfläche (13) zwei flach ansteigend orientierte Steigkanäle (11, 12) für die Nutzflüssigkeit vorgesehen sind, wobei die zwei Steigkanäle (11, 12) in eine gemeinsame Ringkammer (10) münden, welcher eine Zentralkammer (9) umgibt und mit dieser über Durchlassöffnungen (16) verbunden ist, und wobei durch die Zentralkammer (9) das Schadfluid zu der Entlüftungsöffnung (17) und die Heizungsflüssigkeit zu der Abflussöffnung (8) gelangt.

2. Vorrichtung nach Anspruch 1, **dadurch gekennzeichnet, dass** das Verhältnis einer Steighöhe (21) der Steigkanäle (11, 12) zu einer Kanallänge derselben im Bereich von wenigstens 1 : 2 und bevorzugt im Bereich von 1 : 3 oder weniger liegt.

3. Vorrichtung nach Anspruch 1 oder 2, **dadurch gekennzeichnet, dass** die Prallfläche (13) eben ausgebildet ist und bevorzugt senkrecht orientiert ist zu der Zuflussrichtung (15) der optional das Schadfluid aufweisenden Nutzflüssigkeit.

4. Vorrichtung nach einem der Ansprüche 1 bis 3, **dadurch gekennzeichnet, dass** die Prallfläche (13) als Teil einer Wandung (14) der Zentralkammer (9) ausgebildet ist.

5. Vorrichtung nach einem der Ansprüche 1 bis 4, **dadurch gekennzeichnet, dass** das Gehäuse symmetrisch in Bezug auf eine vertikale Mittelebene (22) ausgebildet ist.

6. Vorrichtung nach einem der Ansprüche 1 bis 5, **dadurch gekennzeichnet, dass** der Volumenänderungskörper (18) in einer die Entlüftungsöffnung (17) aufweisenden Horizontalkammer (2) vorgesehen ist, wobei die Horizontalkammer (2) über eine Durchlassöffnung (16) mit der Zentralkammer (9) verbunden ist.

7. Vorrichtung nach einem der Ansprüche 1 bis 6, **dadurch gekennzeichnet, dass** die Horizontalkammer (2) röhrenförmig und/oder in horizontaler Richtung langgestreckt ausgebildet ist.

8. Vorrichtung nach einem der Ansprüche 1 bis 7, **dadurch gekennzeichnet, dass** die Entlüftungsöffnung (17) im Bereich einer ersten Stirnseite der langgestreckten beziehungsweise röhrenförmigen Horizontalkammer (2) vorgesehen ist und dass auf einer gegenüberliegenden zweiten Stirnseite der Horizontalkammer (2) ein manuell betätigbares Verschlusselement (19) vorgesehen ist, wobei in einer Schließstellung des Verschlusselements (19) eine der zweiten Stirnseite zugeordnete Öffnung der Horizontalkammer (2) fluiddicht verschlossen ist und in Öffnungsstellung des Verschlusselements (19) die Öffnung freigegeben ist derart, dass die Nutzflüssigkeit und/oder das Schadfluid durch die Öffnung austreten kann.

9. Vorrichtung nach einem der Ansprüche 1 bis 8, **dadurch gekennzeichnet, dass** die zum Verbinden der Horizontalkammer (2) mit der Zentralkammer (9) vorgesehene Durchlassöffnung (16) an der Horizontalkammer (2) mantelseitig zwischen der ersten Stirnseite und der zweiten Stirnseite vorgesehen ist.

10. Vorrichtung nach einem der Ansprüche 1 bis 9, **dadurch gekennzeichnet, dass** die Steigkanäle (11, 12) und die Ringkammer (10) und die Zentralkammer (9) in einem zweiteilig ausgeführten Grundgehäuse (1) gebildet sind und dass die Horizontalkammer (2) als weiteres Gehäusebauteil ausgebildet ist, welches an das Grundgehäuse (1) angesetzt ist.

## Claims

1. Device for venting a pipeline system, comprising:
- a housing comprising an inflow opening (6), via which a work fluid, optionally permeated by a harmful fluid, enters the housing in an inflow direction (15), comprising an outflow opening (8) for the work fluid, and comprising a venting opening (17) for the harmful fluid, which is provided in an installation position above the inflow opening (6) and the outflow opening (8), and
- a volume change body (18), which seals the venting opening (17) of the housing in a first operating position and unblocks it in a second operating position, the volume change body (18) being in an operative connection with the work fluid in such a way that the venting opening (17) is sealed when a work fluid fill level reaches a target fill level, and otherwise the venting opening (17) is unblocked, in such a way that the harmful fluid escapes from the pipeline system,
**characterised in that** an impact face (13) is provided upstream from the inflow opening (6) in the flow direction (15) of the work fluid optionally permeated with the harmful fluid, and **in that** two ascension pipes (11, 12) for the work fluid, which are orientated shallowly rising, are provided adjacent to the impact face (13), the two ascension pipes (11, 12) opening into a shared annular chamber (10) which encloses a central chamber (9) and is connected thereto via through-openings (16), and the harmful fluid arriving at the venting opening (17) and the heating fluid arriving at the outflow opening (8) via the central chamber (9).

2. Device according to claim 1, **characterised in that** the ratio of an ascension height (21) of the ascension pipes (11, 12) to a pipe length thereof is in the range of at least 1:2 and preferably in the range of 1:3 or less.

3. Device according to either claim 1 or claim 2, **characterised in that** the impact face (13) is formed flat and preferably orientated perpendicular to the inflow direction (15) of the work fluid which optionally comprises the harmful fluid.

4. Device according to any of claims 1 to 3, **characterised in that** the impact face (13) is formed as part of a wall (14) of the central chamber (9).

5. Device according to any of claims 1 to 4, **characterised in that** the housing is formed symmetrical about a vertical central plane (22).

6. Device according to any of claims 1 to 5, **characterised in that** the volume change body (18) is provided in a horizontal chamber (2) which comprises the venting opening (17), the horizontal chamber (2) being connected to the central chamber (9) via a through-opening (16).

7. Device according to any of claims 1 to 6, **characterised in that** the horizontal chamber (2) is formed tubular and/or elongate in the horizontal direction.

8. Device according to any of claims 1 to 7, **characterised in that** the venting opening (17) is provided in the region of a first end face of the elongate or tubular horizontal chamber (2), and **in that** a manually actuable sealing element (19) is provided on an opposing second end face of the horizontal chamber (2), an opening, assigned to the second end face, of the horizontal chamber (2) being sealed in a fluid-tight manner in a closed position of the sealing element (19), and the opening being unblocked in an open position of the sealing element (19) in such a way that the work fluid and/or the harmful fluid can exit through the opening.

9. Device according to any of claims 1 to 8, **characterised in that** the through-opening (16), provided for connecting the horizontal chamber (2) to the central chamber (9) is provided on the outer face of the horizontal chamber (2) between the first end face and the second end face.

10. Device according to any of claims 1 to 9, **characterised in that** the ascension pipes (11, 12) and the annular chamber (10) and the central chamber (9) are formed in a basic housing (1) formed in two parts, and **in that** the horizontal chamber (2) is formed as a further housing component which is placed on the basic housing (1).

## Revendications

1. Dispositif de purge d'air d'un système de tuyauterie, comprenant :
- un boîtier doté d'un orifice d'admission (6), par le biais duquel un liquide utilitaire contenant facultativement un fluide nuisible entre dans le boîtier dans une direction d'admission (15), d'un orifice d'écoulement (8) pour le liquide utilitaire et d'un orifice de purge d'air (17) pour le fluide nuisible, qui est prévu, dans une position de montage, au-dessus de l'orifice d'admission (6) et de l'orifice d'écoulement (8), et
- un corps de changement de volume (18), qui ferme l'orifice de purge d'air (17) du boîtier dans une première position de fonctionnement et le libère dans une seconde position de fonctionnement, le corps de changement de volume (18) étant en liaison fonctionnelle avec le liquide utilitaire de telle manière que l'orifice de purge d'air (17) est fermé lorsqu'un niveau de remplissage de liquide utilitaire atteint une hauteur de remplissage de consigne et que l'orifice de purge d'air (17) est sinon libéré de telle sorte que le fluide nuisible s'échappe du système de tuyauterie,
**caractérisé en ce qu'**une surface d'impact (13) est prévue avant l'orifice d'admission (6) par rapport à la direction d'admission (15) du liquide utilitaire contenant facultativement le fluide nuisible, et **en ce que** deux conduites montantes (11, 12) orientées de manière faiblement ascendante sont prévues pour le liquide utilitaire de manière adjacente à la surface d'impact (13), les deux conduites montantes (11, 12) débouchant dans une chambre annulaire (10) commune, qui entoure une chambre centrale (9) et est reliée à celle-ci par des orifices de passage (16), et le fluide nuisible parvenant à l'orifice de purge d'air (17) et le liquide de chauffage à l'orifice d'écoulement (8) à travers la chambre centrale (9).

2. Dispositif selon la revendication 1, **caractérisé en ce que** le rapport entre une hauteur d'ascension (21) des conduites montantes (11, 12) et une longueur de conduite de celles-ci est de l'ordre d'au moins 1:2 et de préférence d'1:3 ou moins.

3. Dispositif selon la revendication 1 ou 2, **caractérisé en ce que** la surface d'impact (13) est réalisée plane et est orientée de préférence perpendiculairement à la direction d'admission (15) du liquide utilitaire comportant facultativement le fluide nuisible.

4. Dispositif selon l'une des revendications 1 à 3, **caractérisé en ce que** la surface d'impact (13) est réalisée comme partie d'une paroi (14) de la chambre centrale (9).

5. Dispositif selon l'une des revendications 1 à 4, **caractérisé en ce que** le boîtier est réalisé symétrique par rapport à un plan médian vertical (22).

6. Dispositif selon l'une des revendications 1 à 5, **caractérisé en ce que** le corps de changement de volume (18) est prévu dans une chambre horizontale (2) comportant l'orifice de purge d'air (17), la chambre horizontale (2) étant reliée à la chambre centrale (9) par le biais d'un orifice de passage (16).

7. Dispositif selon l'une des revendications 1 à 6, **caractérisé en ce que** la chambre horizontale (2) est réalisée de forme tubulaire et/ou allongée dans la direction horizontale.

8. Dispositif selon l'une des revendications 1 à 7, **caractérisé en ce que** l'orifice de purge d'air (17) est prévu dans la zone d'un premier côté frontal de la chambre horizontale (2) allongée ou tubulaire et **en ce qu'**un élément de fermeture (19) actionnable manuellement est prévu sur un second côté frontal opposé de la chambre horizontale (2), un orifice de la chambre horizontale (2) associé au second côté frontal étant fermé de manière étanche aux fluides dans une position de fermeture de l'élément de fermeture (19) et l'orifice étant libéré dans la position d'ouverture de l'élément de fermeture (19) de telle manière que le liquide utilitaire et/ou le fluide nuisible peut sortir par l'orifice.

9. Dispositif selon l'une des revendications 1 à 8, **caractérisé en ce que** l'orifice de passage (16) prévu pour la liaison de la chambre horizontale (2) à la chambre centrale (9) est prévu sur la chambre horizontale (2) côté surface latérale entre le premier côté frontal et le second côté frontal.

10. Dispositif selon l'une des revendications 1 à 9, **caractérisé en ce que** les conduites montantes (11, 12) et la chambre annulaire (10) et la chambre centrale (9) sont formées dans un boîtier de base (1) conçu en deux parties et **en ce que** la chambre horizontale (2) est réalisée comme autre élément de boîtier, qui est appliqué sur le boîtier de base (1).
